# EUROPEAN PATENT SPECIFICATION

(11) **EP 1 578 060 B1**
(45) Date of publication and mention of the grant of the patent: **31.10.2007**
(21) Application number: 05005299.2
(22) Date of filing: 10.03.2005
(51) Int. Cl.: H04L 12/28

(54) **WLAN radio terminal with power save mode improving voice transmission**
WLAN Funkgerät mit Energiesparmodus zur verbesserten Sprachübertragung
Terminal radio WLAN avec un mode d'économie d'énergie améliorant la transmission de la voix

(30) Priority: 16.03.2004 JP 2004074387
(43) Date of publication of application: 21.09.2005
(73) Proprietor: NEC CORPORATION, Tokyo (JP)
(72) Inventor: Shinohara, Masahito, Tokyo (JP)
(74) Representative: Glawe, Delfs, Moll

(56) References cited:
- EP-A- 0 615 364
- "IEEE standard Part 11: wireless LAN medium access control (MAC) and physical layer (PHY) specification. (ISO/IEC 8802-11, ANSI/IEEE Std 802.11-1999) Chapter 11: MAC sublayer management entity" ISO/IEC 8802-11 ANSI/IEEE STD 802.11, 20 August 1999 (1999-08-20), pages 123-137, XP002207975
- LIU H-H ET AL: "A Scheme for Supporting Voice over IEEE 802.11 Wireless Local Area Network" PROCEEDINGS OF THE NATIONAL SCIENCE COUNCIL. REPUBLIC OF CHINA. PART A: PHYSICAL SCIENCE AND ENGINEERING, NATIONAL SCIENCE COUNCIL, TAIPEI, TW, vol. 25, no. 4, 2001, pages 259-268, XP002265213 ISSN: 0255-6588

## Description

### BACKGROUND OF THE INVENTION

### 1. Field of the Invention:

The present invention relates to a radio communication terminal apparatus, a radio communication system, and a radio communication method, and more particularly, to a radio communication terminal apparatus that can operate in a power save mode, a radio communication system for use with the apparatus, and a radio communication method for making communications in the system.

### 2. Description of the Related Art:

Conventionally, a known portable voice communication terminal apparatus (hereinafter called the "terminal apparatus") can transmit and receive packet data (see Patent Document 1 (JP-2001-86262-A)). For example, a terminal apparatus can communicate data with an access point through a wireless LAN (Local Area Network), as is well known in the art. The access point refers to a radio relay station.

A terminal apparatus communicates data with an access point through a wireless LAN using, for example, packet data such as voice packet, data packet and the like.

In data communications that use voice packets, delayed or missing voice packets will result in lower voice reproductibility. For this reason, the terminal apparatus gives higher priority to the transmission of voice packets than the transmission of other packets such that voice packets can be transmitted at all times at regular time intervals.

Upon receipt of voice packets destined for a terminal apparatus, the access point immediately transmits the received voice packets to the terminal apparatus when the terminal apparatus is in a non-power save mode (active mode).

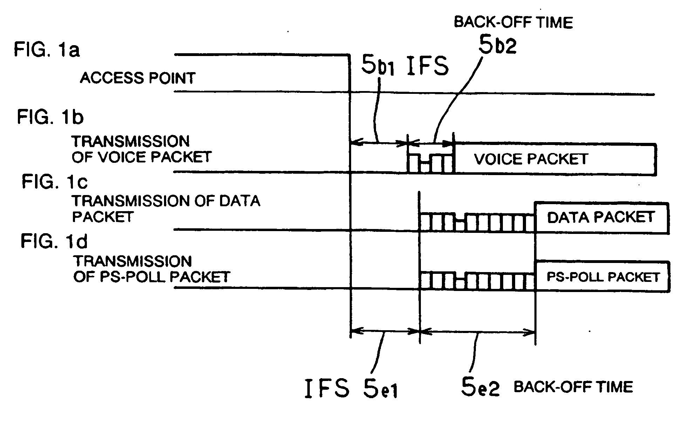

Figs. 1 a to 1 d are explanatory diagrams for describing a packet priority control conducted by a conventional terminal apparatus.

Fig. 1 a is a timing chart representing a communication state at an access point. Fig. 1 b is a timing chart showing timing for transmitting a voice packet. Fig. 1 c is a timing chart showing timing for transmitting a data packet. Fig. 1 d is a timing chart showing timing for transmitting a PS-POLL packet that prompts the access point to deliver a packet.

As illustrated in Figs. 1 a to 1d, the terminal apparatus performs QoS (Quality of Service) control to give a higher priority to the transmission of the voice packet than the transmission of other packets.

The QoS control involves reducing inter-frame space (IFS: non-communication monitoring period) 5b1 of the voice packet to be shorter than inter-frame space 5e1 of packets that are different from voice data packets, and reducing back-off time 5b2 of the voice packet to be shorter than back-off time 5e2 of packets that are different from voice data packets. Packets that are different from the voice data packets include the data packet and PS-POLL packet.

The PS-POLL packet has an inter-frame space and a back-off time which are set, for example, so that they are equivalent to the inter-frame space and back-off time given to the best-effort type data packet.

A terminal apparatus, which is capable of communicating data through a wireless LAN, employs a rechargeable battery for its power supply. Some terminal apparatus enters a power save mode when not making communications using voice packets in order to allow longer call times between battery recharges. The terminal apparatus and access point operate in the power save mode in the following manner.

The terminal apparatus notifies the access point that the terminal apparatus is in the power save mode. The access point stores packets destined for the terminal apparatus in the power save mode in a memory contained therein. For periodically transmitting a beacon to the terminal apparatus in the power save mode, when the access point has stored packets destined for the terminal apparatus, the access point transmits the beacon having an enabled TIM (Traffic Indication Map) bit to the terminal apparatus. The terminal apparatus periodically changes its state into the active state in accordance with the beacon transmission period. After transition to the active state, the terminal apparatus receives the beacon. When the TIM bit in the received beacon is enabled, the terminal apparatus transmits a PS-POLL packet to the access point. The terminal apparatus receives a packet destined therefor, which is transmitted from the access point in response to the transmitted PS-POLL packet, and then transmits data to the access point, and then changes its mode into the power save mode again.

Currently, techniques for further reducing the power consumption of terminal apparatuses are desired in order to permit ever longer communication time between battery recharges. To further reduce the power consumption of terminal apparatuses, a terminal apparatus may make communications through wireless LAN in the power save mode even during a call as well as during when the terminal apparatus is idle.

However, the terminal apparatus that conducts the packet priority control, as illustrated in Fig. 1, suffers from degraded voice quality when it enters the power save mode during a call. The reason for the degraded voice quality is discussed below. After the terminal apparatus that conducts the packet priority control, as illustrated in Fig. 1, enters the power save mode, the terminal apparatus transmits a PS-POLL packet before it receives a voice packet.

However, the terminal apparatus that conducts the packet priority control, as illustrated in Fig. 1, assigns the same transmission priority to the PS-POLL packet and data packet. Due to this assignment of the same transmission priority, the terminal apparatus cannot give a preference for the reception of voice packets over the transmission of data packets. Consequently, the terminal apparatus is more likely to receive voice data packets after the transmission of data packets, causing difficulties in periodic reception of voice packets.

Thus, the terminal apparatus that conducts the packet priority control, as illustrated in Fig. 1, is more likely to cause delayed or missing voice packets, when it is in the power save mode during a call, thereby causing degraded voice quality.

IEEE standard Part 11: wireless LAN medium access control (MAC) and physical layer (PHY) specification. (ISO/IEC 8802-11, ANSI/IEEE Std 802.11-1999) Chapter 11: MAC sublayer management entity" ISO/IEC 8802-11 ANSI/IEEE STD 802.11, 20 August 1999 (1999-08-20), pages 123 - 137, XP002207975 discloses a radio communication terminal according to the preamble of claim 1.

Document LIU H-H ET AL: "A Scheme for Supporting Voice over IEEE 802.11 Wireless Local Area Network" PROCEEDINGS OF THE NATIONAL SCIENCE COUNCIL. REPUBLIC OF CHINA. PART A: PHYSICAL SCIENCE AND ENGINEERING, NATIONAL SCIENCE COUNCIL, TAIPEI, TW, vol. 25, no. 4, 2001, pages 259-268, XP002265213 ISSN: 0255-6588 discloses a WLAN system where there are radio terminals with a power save mode. They receive beacon that will trigger the transmission by the terminal of the packets to the access point. The beacon includes a DTIM that will indicate if there are data to be transmitted to the terminal. If there are, the terminal transmits the most urgent data to send, i.e. voice and then data and a control packet requesting the from AP the packets (see Fig. 10).

### SUMMARY OF THE INVENTION

It is an object of the present invention to provide a radio communication terminal apparatus, a radio communication system, and a radio communication method that are capable of suppressing degraded voice quality while accomplishing lower power consumption.

This object is achieved by a radio communication terminal as defined in claim 1 and by a radio communication method as defined in claim 7; the dependent claims are related to further developments of the invention.

To achieve the above object, a radio communication terminal apparatus of the present invention first transmits a voice packet and a control packet to a radio relay station and then transmits a data packet to the radio relay station after the radio communication terminal apparatus receives a packet transmitted from the radio relay station in response to the control packet.

Thus, even if the radio communication terminal apparatus is in the power save mode when it transmits or receives a voice packet, the transmission of the voice packet does have higher priority than the transmission of a data packet, thereby reducing a degraded voice quality.

Preferably, the control packet is transmitted after the voice packet has been transmitted, and subsequently, the data packet is transmitted.

As an alternative, preferably the voice packet is transmitted after the control packet has been transmitted, and subsequently, the data packet is transmitted.

Also preferably, the radio relay station is an access point of a wireless LAN, the access point transmits a beacon as a reference signal, and the control packet is a PS-Poll packet.

Further preferably, the sum of the inter-frame space of the voice packet and a back-off time of the voice packet, and the sum of the inter-frame space of the control packet and a back-off time of the control packet are shorter than the sum of the inter-frame space of the data packet and the back-off time of the data packet.

According to the invention described above, the data packet can be transmitted to the radio relay station after the voice packet and control packet have been transmitted to the radio relay station by controlling the inter-frame space and back-off time of the voice packet, control packet, and data packet, respectively.

Also, a radio communication system includes the foregoing radio communication terminal apparatus, and a radio relay station for transmitting a packet stored therein to the radio communication terminal when the radio relay station receives the control packet while the radio communication terminal apparatus is operating in the power save mode. According to the present invention described above, the radio communication system can provide similar advantages to the foregoing.

According to the present invention, even if the radio communication terminal apparatus is in the power save mode when it transmits or receives a voice packet, the transmission and reception of the voice packet does have higher priority than the transmission of a data packet. It is therefore possible to reduce a degraded voice quality.

This is because the voice packet and control packet are first transmitted to the radio relay station, and the data packet is transmitted to the radio relay station after the radio communication terminal apparatus has received a packet transmitted from the radio relay station in response to the control packet.

The above and other objects, features, and advantages of the present invention will become apparent from the following description with reference to the accompanying drawings which illustrate examples of the present invention.

### BRIEF DESCRIPTION OF THE DRAWINGS

Fig. 1a is a timing chart representing a communication state in a conventional access point;
Fig. 1b is a timing chart showing timing for transmitting a voice packet;
Fig. 1c is a timing chart showing timing for transmitting a data packet;
Fig. 1d is a timing chart showing timing for transmitting a PS-POLL packet to prompt an access point to deliver packets;
Fig. 2 is a block diagram illustrating a radio communication system according to one embodiment of the present invention;
Fig. 3 is a block diagram illustrating a voice communication terminal apparatus according to one embodiment of the present invention;
Fig. 4a is a timing chart representing a beacon transmission operation;
Fig. 4b is a timing chart showing timing for transmitting a voice packet;
Fig. 4c is a timing chart showing timing for transmitting a data packet;
Fig. 4d is a timing chart showing timing for transmitting a PS-POLL packet;
Fig. 5a is a timing chart showing packets transmitted from and received at access point 101;
Fig. 5b is a timing chart showing packets transmitted from and received at voice communication terminal apparatus 102;
Fig. 5c is a timing chart showing packets transmitted from and received at voice communication terminal apparatus 103; and
Fig. 5d is a timing chart showing packets transmitted from and received at data terminal apparatus 104.

### DETAILED DESCRIPTION OF THE PREFERRED EMBODIMENTS

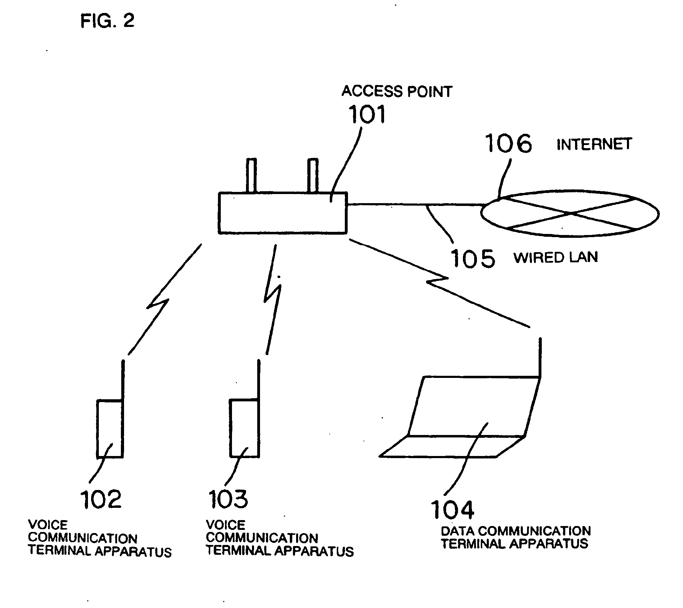

Fig. 2 is a block diagram illustrating a radio communication system according to one embodiment of the present invention. In Fig. 2, the illustrated radio communication system comprises wireless LAN access point 101; voice communication terminal apparatus 102; voice communication terminal apparatus 103; and data communication terminal apparatus 104.

Access point 101 is an example of a radio relay station. Access point 101 connects voice communication terminal apparatus 102 with voice communication terminal apparatus 103 through a wireless LAN. Access point 101 also connects to Internet 106 through wired LAN 105.

Each of voice communication terminal apparatuses 102, 103 is a radio communication apparatus according to one embodiment of the present invention. Each of voice communication terminal apparatuses 102, 103 is portable and operates with electric power supplied from a power source that may be a rechargeable battery. Voice communication terminal apparatuses 102, 103 can communicate voice and data with each other through access point 101.

Each of voice communication terminal apparatuses 102, 103 can make voice communications with other terminal apparatuses through access point 101 and Internet 106. Each of voice communication terminal apparatuses 102, 103 communicates data using packets. In this embodiment, voice communication terminal apparatus 103 is identical in configuration to voice communication terminal apparatus 102.

Each of voice communication terminal apparatuses 102, 103 has a power save mode in which communications are made only on a periodic basis. After each of voice communication terminal apparatuses 102, 103 enters the power save mode and notifies access point 101 that it is in the power save mode. In response, access point 101 stores packets destined for the voice communication terminal apparatus in the power save mode in its memory.

Also, when access point 101 has stored therein packets destined for a voice communication terminal apparatus in the power save mode, access point 101 periodically transmits a beacon having an enabled TIM bit to this voice communication terminal apparatus.

Data communication terminal apparatus 104 can communicate data by connecting to Internet 106 through access point 101.

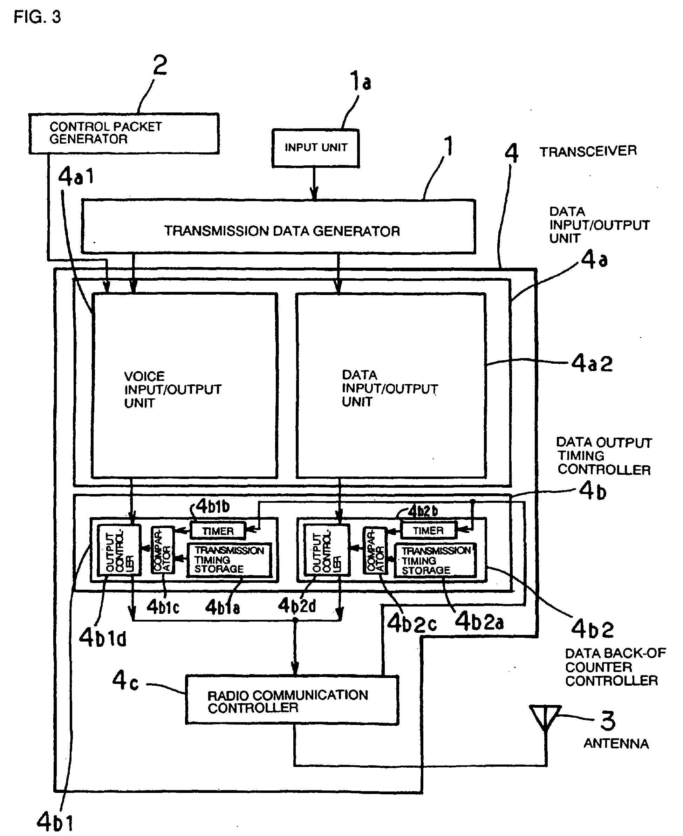

Fig. 3 is a block diagram illustrating an example of voice communication terminal apparatus 102. Because voice communication terminal apparatus 103 is identical in configuration to voice communication terminal apparatus 102 as illustrated in Fig. 3, description of voice communication terminal apparatus 103 is omitted.

Referring to Fig. 3, voice communication terminal apparatus 102 comprises input unit 1a; transmission data generator 1; control packet generator 2; antenna 3; and transceiver 4. Transceiver 4 comprises data input/output unit 4a; data output timing controller 4b; and radio communication controller 4c. Data input/output unit 4a comprises voice input/output unit 4a1; and data input/output unit 4a2. Data output timing controller 4b comprises voice back-off counter controller 4b1; and data back-off counter controller 4b2.

Input unit 1a receives inputs from the user. For example, input unit 1 a receives a voice, and a data input that are different from the voice of the user. Transmission data generator 1 generates transmission data based on such inputs received by input unit 1 a. For example, transmission data generator 1 generates voice packets in response to a voice input from the user. Transmission data generator 1 generates data packets in response to the application of data that are different from the voice.

Control packet generator 2 generates a PS-POLL packet. The PS-POLL packet is a control packet for prompting access point 101 to deliver packets. For example, control packet generator 2 stores PS-POLL packet information indicative of a PS-POLL packet in memory within control packet generator 2. Control packet generator 2 generates the PS-POLL packet by reading the PS-POLL packet information from memory.

Antenna 3 transmits radio signal packets to access point 101, and receives radio signal packets transmitted from access point 101. For example, antenna 3 receives a beacon and a communication packet transmitted from access point 101. The beacon is an example of a reference signal.

Transceiver 4 transmits a voice packet and a PS-POLL packet to access point 101 through antenna 3 before a predetermined time elapses from the time at which the antenna received the beacon. Transmission data generator 1 generates the voice packet. Control packet generator 2, on the other hand, generates the PS-POLL packet.

Transceiver 4 also transmits a data packet to access point 101 after a lapse of a predetermined time from the time at which antenna 3 received the beacon, specifically, after antenna 3 has received a packet transmitted from access point 101 in response to the PS-POLL packet. Transmission data generator 1 generates the data packet.

Data input/output unit 4a receives packets such as a voice packet, a data packet, and the like generated by transmission data generator 1. Data input/output unit 4a also receives the PS-POLL packet generated by control packet generator 2.

Radio communication controller 4c delivers a reference timing signal to data output timing controller 4b when antenna 3 receives the beacon. Data output timing controller 4b has previously stored an inter-frame space of the voice packet, a back-off time of the voice packet, an inter-frame space of the PS-POLL packet, a back-off time of the PS-POLL packet, an inter-frame space of the data packet, and a back-off time of the data packet in its internal memory.

In the following, the inter-frame space is abbreviated as "IFS" and the back-off time as "BOT."

In this embodiment, each IFS and each BOT are set such that the sum of the IFS and BOT of the voice packet is smaller than the sum of the IFS and BOT of the data packet. Further, in this embodiment, each IFS and each BOT are set such that the sum of the IFS and BOT of the PS-POLL packet is equal to the sum of the IFS and BOT of the voice packet.

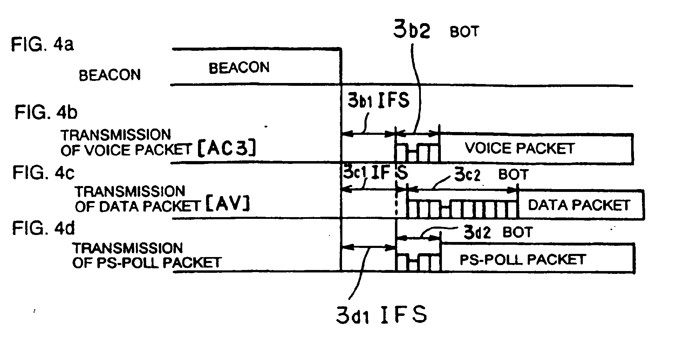

Figs. 4a to 4d are explanatory diagrams representing the relationship among IFS 3b1 and BOT 3b2 of the voice packet, IFS 3c1 and BOT 3c2 of the data packet, and IFS 3d1 and BOT 3d2 of the PS-POLL packet.

Fig. 4a is a timing chart representing a beacon transmission operation. Fig. 4b is a timing chart showing timing for transmitting a voice packet. Fig. 4c is a timing chart showing timing for transmitting a data packet. Fig. 4d is a timing chart showing timing for transmitting a PS-POLL packet.

In this embodiment, the voice packet has IFS 3b1 equal in length to IFS 3d1 of the PS-POLL packet. The data packet in turn has IFS 3c1 longer than IFS 3d1 of the PS-POLL packet. Also, the voice packet has BOT 3b2 equal in length to BOT 3d of the PS-POLL packet. The data packet in turn has BOT 3c2 longer than BOT 3d2 of the PS-POLL packet.

In Fig. 3, data output timing controller 4b starts measuring the time in response to a reference timing signal supplied thereto from radio communication controller 4c. Data output timing controller 4b delivers the voice packet received from data input/output unit 4a to radio communication controller 4c when the time measured thereby is equal to the sum of IFS 3b1 and BOT 3b2 of the voice packet. Also, data output timing controller 4b delivers the PS-POLL packet received from data input/output unit 4a to radio communication controller 4c when the time measured thereby is equal to the sum of IFS 3d1 and BOT 3d2 of the PS-POLL packet. Further, data output timing controller 4b delivers the data packet received from data input/output unit 4a to radio communication controller 4c when the time measured thereby is equal to the sum of IFS 3c1 and BOT 3c2 of the data packet.

Radio communication controller 4c transmits the packet delivered from data output timing controller 4b from antenna 3 to access point 101 in the form of a radio signal.

Voice input/output unit 4a1 receives a voice packet generated by transmission data generator 1 and a PS-POLL packet generated by control packet generator 2. Voice input/output unit 4a1 stores the voice packet and PS-POLL packet in the form of queue.

Data input/output unit 4a2 receives a data packet generated by transmission data generator 1. Data input/output unit 4a2 stores the data packet in the form of queue.

Voice back-off counter controller 4b1 comprises transmission timing storage 4b1 a; timer 4b1b; comparator 4b1 c; and output controller 4b1 d. Transmission timing storage 4b1 a stores IFS 3b1 and BOT 3b2 of the voice packet, and the sum of IFS 3b1 and BOT 3b2 of the voice packet. Timer 4b1 b starts measuring the time in response to a reference timing signal supplied thereto from radio communication controller 4c. Comparator4b1c compares the sum of IFS 3b1 and BOT 3b2 of the voice packet stored in transmission timing storage 4b1a with the time measured by timer 4b1b. Output controller 4b1 b delivers a packet stored in voice input/output unit 4a1 to radio communication controller 4c when comparator 4b1 c detects that the time measured by timer 4b1b is equal to the sum of IFS 3b1 and BOT 3b2 of the voice packet.

Data back-off counter controller 4b2 comprises transmission timing storage 4b2a; timer 4b2b; comparator 4b2c; and output controller 4b2d. Transmission timing storage 4b2a stores IFS 3c1 and BOT 3c2 of the data packet, and the sum of IFS 3c1 and BOT 3c2 of the data packet. Timer 4b2b starts measuring the time in response to a reference timing signal supplied thereto from radio communication controller 4c. Comparator 4b2c compares the sum stored in transmission timing storage 4b2a with the time measured by timer 4b2b. Output controller 4b2d delivers the data packet stored in data input/output unit 4a2 to radio communication controller 4c when comparator 4b2c detects that the sum stored in transmission timing storage 4b2a is equal to the time measured by timer 4b2b.

Next, description will be made of the operation of the radio communication system.

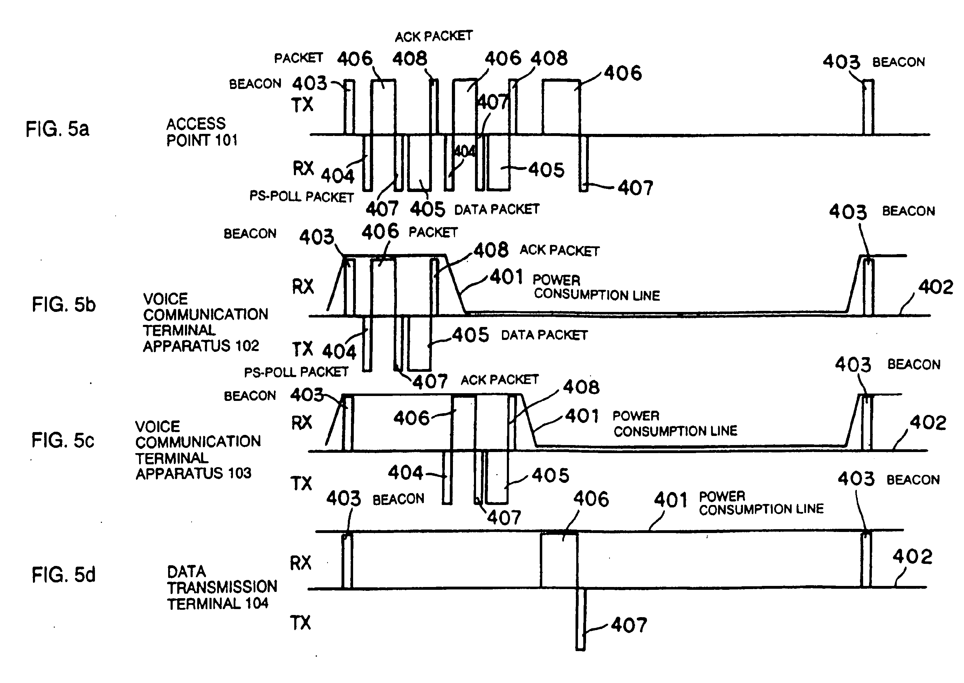

Figs. 5a to 5d include timing charts for describing the communication operation of the radio communication system illustrated in Fig. 2. Fig. 5a is a timing chart showing packets transmitted from and received at access point 101. Fig. 5b is a timing chart showing packets transmitted from and received at voice communication terminal apparatus 102. Fig. 5c is a timing chart showing packets transmitted from and received at voice communication terminal apparatus 103. Fig. 5d is a timing chart showing packets transmitted from and received at data terminal apparatus 104.

In each of Figs. 5a to 5d, a TX side indicates the transmission of packets, and an RX side indicates the reception of packets. Also, in each of Figs. 5b to 5d, power consumption line 401 shows the power consumed by each terminal apparatus. The closer the power consumption line is to center line 402, the lower is the power consumed by a terminal apparatus associated therewith.

In the following, referring to Figs. 5a to 5d, description will be made explaining how the radio communication system illustrated in Fig. 2 operates. Assume in the following description that voice communication terminal apparatuses 102, 103 are operating in the power save mode, while data terminal apparatus 104 is operating in a non-power save mode (active mode).

Each of voice communication terminal apparatuses 102, 103, upon entry into the power save mode, notifies access point 101 that it is in the power save mode. Specifically, radio communication controller 4c in each of voice communication terminal apparatuses 102, 103 transmits a radio signal indicative of the power save mode to access point 101 through antenna 3. It should be noted that in each of voice communication terminal apparatuses 102, 103, transmission data generator 1 and control packet generator 2 continue their operations even in the power save mode.

Each transmission data generator 1 generates a voice packet in accordance with a voice entered by the user. Also, each transmission data generator 1 generates a data packet in accordance with data that has been entered and that is different from the voice. Each transmission data generator 1 delivers the generated voice packet to voice input/output unit 4a1. Transmission data generator 1 also delivers the generated data packet to data input/output unit 4a2. Control packet generator 2 in each of voice communication terminal apparatuses 102, 103 generates a PS-POLL packet. Each control packet generator 2 delivers the generated PS-POLL packet to voice input/output unit 4a1.

Upon receipt of the notification showing that voice communication terminal apparatus 102 is in the power save mode, access point 101 stores packets destined for voice communication terminal apparatus 102 in its memory. When access point 101 periodically transmits beacon 403 to voice communication terminal apparatus 102, while it has packets destined for voice transmission terminal apparatus 102 stored in its memory, access point 101 transmits beacon 403 having an enabled TIM bit to voice communication terminal apparatus 102 (see Fig. 5a).

Also, upon receipt of the notification showing that voice communication terminal apparatus 103 is in the power save mode, access point 101 stores packets destined for voice communication terminal apparatus 103 in its memory. When access point 101 periodically transmits beacon 403 to voice communication terminal apparatus 103, while it has packets destined for voice transmission terminal apparatus 103 stored in its memory, access point 101 transmits beacon 403 having an enabled TIM bit to voice communication terminal apparatus 103 (see Fig. 5a).

Voice communication terminal apparatuses 102, 103, which are in the power save mode, periodically change their state into the active state in accordance with the transmission period of beacon 403 that is periodically transmitted from access point 101. Each of voice communication terminal apparatuses 102, 103, once in the active state, starts the transmission and reception of radio signals. Each of voice communication terminal apparatus 102, 103 consumes more power when it is in the active state (see power consumption line 401 in Fig. 5b and power consumption line 401 in Fig. 5c).

After the transition to the active state, each of voice communication terminal apparatuses 102, 103 receives beacon 403 transmitted from access point 101 (see Fig. 5b and 5c). Because voice communication terminal 102 is substantially similar in operation to voice communication terminal apparatus 103, except for operation timings, the following description will be centered on the operation of voice communication terminal apparatus 102.

Upon receipt of beacon 403 transmitted from access point 101 through antenna 3, radio communication controller 4c of voice communication terminal apparatus 102 delivers a reference timing signal to timer 4b1 b and timer 4b2b.

Each of timers 4b1 b, 4b2b, when supplied with the reference timing signal, starts measuring the time. Comparator 4b1c compares the sum of IFS 3b1 and BOT 3b2 of the voice packet stored in transmission timing storage 4b1 a with the time measured by timer 4b1 b. Comparator 4b2c compares the sum of IFS 3c1 and BOT 3c2 of the data packet stored in transmission timing storage 4b2a with the time measured by timer 4b2b. Output controller 4b1 d delivers the packets stored in voice input/output unit 4a1, i.e., the voice packet and PS-POLL packet to radio communication controller 4c when comparator 4b1 c detects that the time measured by timer 4b1 b is equal to the sum of IFS 3b1 and BOT 3b2 of the voice packet. Radio communication controller 4c transmits the voice packet and PS-POLL packet to access point 101 (see Fig. 5b). It should be noted that only PS-POLL packet 404 is shown in Fig. 5b.

When a voice packet is applied to voice input/output unit 4a1 prior to a PS-POLL packet, output controller 4b1d transmits the PS-POLL packet after the voice packet has been transmitted.

On the other hand, when a voice packet is applied to voice input/output unit 4a1 after a PS-POLL packet, output controller 4b1 d transmits the voice packet after the PS-POLL packet has been transmitted.

Output controller 4b2d delivers the data packet stored in data input/output unit 4a2 to radio communication controller 4c when comparator 4b2c detects that the time measured by timer 4b2b is equal to the sum of IFS 3c1 and BOT 3c2 of the data packet. Radio communication controller 4c transmits data packet 405 to access point 101 (see Fig. 5b).

As illustrated in Figs. 4a to 4d, in this embodiment, the sum of IFS and BOT of the voice packet is set shorter than the sum of IFS and BOT of the data packet. Therefore, the voice packet and PS-POLL packet 404 are transmitted before data packet 405 is transmitted (see Fig. 5b). The sum of IFS and BOT of the data packet is preferably longer than at least the sum of IFS of the voice packet, BOT of the voice packet and the time from the delivery of the PS-POLL packet to the end of reception of a packet transmitted from access point 101 in accordance with the PS-POLL packet.

Upon receipt of PS-POLL packet 404, access point 101 transmits packet 406 destined for voice communication terminal apparatus 102, stored in its internal memory, to voice communication terminal apparatus 102 after an SIFS (short inter-frame space) time elapses (see Fig. 5a). In this event, when a voice packet destined for voice communication terminal apparatus 102 is stored in the memory of access point 101, the voice packet is transmitted to voice communication terminal apparatus 102.

Voice communication terminal apparatus 102 receives packet (for example, voice packet) 406 transmitted thereto from access point 101 in response to the transmission of PS-POLL packet, and then transmits ACK packet 407 to access point 101 (see Fig. 5b).

Afterwards, when comparator 4b2c detects that the time measured by timer 4b2b is equal to the sum of IFS 3c1 and BOT 3c2 of the data packet, output controller 4b2d delivers the data packet stored in data input/output unit 4a2 to radio communication controller 4c. Radio communication controller 4c transmits data packet 405 to access point 101 (see Fig. 5b).

Subsequently, voice communication terminal apparatus 102 receives ACK packet 408 transmitted from access point 101. Voice communication terminal apparatus 102 then reduces the speed of the system clock, stops the operation of transceiver 4, and enters the power save mode.

Then, access point 101 makes a radio communication with voice communication terminal apparatus 103 in a manner similar to voice communication terminal apparatus 102, and subsequently makes a radio communication with data terminal apparatus 104.

According to this embodiment, the PS-POLL packet is set at the same transmission priority as the voice packet. For this reason, even if the voice communication terminal apparatus is operating in the power save mode, the transmission/reception of the voice packet has higher priority than the transmission of the data packet. Therefore, it possible to reduce degraded voice quality while power saving is accomplished.

Transmission data generator 1 may comprise a voice packet generator for generating a voice packet in accordance with a voice input from the user, and a data packet generator for generating a data packet in accordance with an input of data different from the voice.

While preferred embodiments of the present invention have been described using specific terms, such description is for illustrative purposes only, and it is to be understood that changes and variations may be made without departing from the scope of the following claims.

## Claims

1. A radio communication terminal apparatus having a power save mode and comprising:
a transmission data generator (1) for generating a voice packet (406) and a data packet (405);
a control packet generator (2) for generating a control packet (404);
a receiver for receiving a reference signal (403) and a packet transmitted from a radio relay station (101); and
a transmitter for transmitting the voice packet generated by said transmission data generator (1), the control packet generated by said control packet generator (2) and the data packet generated by said transmission data generator (1) to said radio relay station,
***characterized in that*** said transmitter is adapted to transmit said voice packet and said control packet before a predetermined time elapses from the time at which said receiver received said reference signal, and to transmit said data packet after said receiver has received a packet transmitted from said radio relay station in response to said control packet, wherein said reference signal is a beacon used in the power save mode, and said control packet is a PS-Poll packet.

2. The radio communication terminal apparatus according to claim 1, wherein said transmitter is adapted to transmit the control packet generated by said control packet generator (2) after said transmitter has transmitted the voice packet generated by said transmission data generator (1), and subsequently to transmit the data packet generated by said transmission data generator (1).

3. The radio communication terminal apparatus according to claim 1, wherein said transmitter is adapted to transmit the voice packet generated by said transmission data generator (1) after said transmitter has transmitted the control packet generated by said control packet generator (2), and subsequently to transmit the data packet generated by said transmission data generator (1).

4. The radio communication terminal apparatus according to any of claims 1 to 3,
wherein said radio relay station is an access point of a wireless LAN.

5. The radio communication terminal apparatus according to claim 4, wherein the sum of an inter-frame space and a back-off time of the voice packet (406), and the sum of an inter-frame space and a back-off time of the control packet (404) are shorter than the sum of an inter-frame space and a back-off time of the data packet (405).

6. A radio communication system comprising:
the radio communication terminal apparatus according to any of claims 1 to 5; and
a radio relay station (101) for transmitting a packet stored therein to said radio communication terminal (102, 103) when said radio relay station receives the control packet while said radio communication terminal apparatus is operating in the power save mode.

7. A radio communication method comprising the steps of:
generating a voice packet (406);
generating a data packet (405);
generating a control packet (404);
receiving a reference signal (403) transmitted from a radio relay station (101) in a power save mode;
transmitting the voice packet (406) and the control packet (404) to said radio relay station (101) before a lapse of a predetermined time from the time at which the reference signal was received;
receiving a packet transmitted from said radio relay station (101) in response to the control packet; and
transmitting the data packet (405) to said radio relay station after said packet has been received,
wherein said reference signal is a beacon used in the power save mode, and said control packet is a PS-Poll packet.

8. The radio communication method according to claim 7, wherein said step of transmitting the voice packet (406) and the control packet (404) includes transmitting the voice packet and thereafter transmitting the control packet.

9. The radio communication method according to claim 7, wherein said step of transmitting the voice packet (406) and the control packet (404) includes transmitting the control packet and thereafter transmitting the voice packet.

10. The radio communication method according to any of claims 7 to 9, wherein said radio relay station (101) is an access point of a wireless LAN.

11. The radio communication method according to any of claims 7 to 10, wherein the sum of an inter-frame space and a back-off time of the voice packet (406), and the sum of an inter-frame space and a back-off time of the control packet (404) are shorter than the sum of an inter-frame space and a back-off time of the data packet (405).

12. A radio communication method comprising:
the respective steps included in the radio communication method according to any of claims 7 to 11; and
a packet transmission step in which said radio relay station (101) transmits a packet stored therein to said radio communication terminal when said radio relay station receives the control packet (404) while said radio communication terminal is operating in the power save mode.

## Patentansprüche

1. Funkkommunikationsanschlussgerät mit einem Energiesparmodus und mit:
einem Sendedatengenerator (1) zum Generieren eines Sprachpakets (406) und eines Datenpakets (405);
einem Steuerpaketgenerator (2) zum Generieren eines Steuerpakets (404);
einem Empfänger zum Empfang eines Bezugsignals (403) und eines Pakets, das von einer Funkrelais-Station (101) gesendet wurde, und
einem Transmitter zum Übertragen des Sprachpakets, das von dem Sendedatengenerator (1) erzeugt wurde, des Steuerpakets, das von dem Steuerpaketgenerator (2) erzeugt wurde, und des Datenpakets, das durch den Sendedatengenerator (1) erzeugt wurde, an die Funkrelaisstation, **dadurch gekennzeichnet, dass** der Transmitter ausgebildet ist, das Sprachpaket und das Steuerpaket vor Ablauf einer vorgeschriebenen Zeit ab der Zeit, zu der der Empfänger das Bezugssignal erhalten hat, zu übersenden und das Datenpaket zu senden, nachdem der Empfänger ein Paket erhalten hat, das von der Funkrelaisstation in Antwort auf das Steuersignal gesendet wurde, wobei das Bezugssignal ein Markierungssignal ist, das in dem Energiesparmodus verwendet wird, und das Steuerpaket ein PS-Poll-Paket ist.

2. Funkkommunikationsanschlussgerät nach Anspruch 1, wobei der Transmitter ausgebildet ist, das durch den Steuerpaketgenerator (2) generierte Steuerpaket zu senden, nachdem der Transmitter das durch den Sendedatengenerator (1) generierte Sprachpaket übermittelt hat, und zum anschließenden Senden des Datenpakets, das durch den Sendedatengenerator (1) erzeugt wurde.

3. Funkkommunikationsanschlussgerät nach Anspruch 1, wobei der Transmitter ausgebildet ist, das durch den Sendedatengenerator (1) generierte Sprachpaket zu senden, nachdem der Transmitter das durch den Steuerpaketgenerator (2) generierte Steuerpaket übertragen hat, und anschließend das Datenpaket zu senden, das durch den Sendedatengenerator (1) erzeugt wurde.

4. Funkkommunikationsanschlussgerät nach einem der Ansprüche 1 bis 3, wobei die Funkrelaisstation ein Zugangspunkt eines drahtlosen LAN ist.

5. Funkkommunikationsanschlussgerät nach Anspruch 4, wobei die Summe eines Interrahmenraumes und einer Back-Off-Zeit des Sprachpakets (406) und die Summe eines Interrahmenraumes und einer Back-Off-Zeit des Steuerpakets (404) kleiner sind, als die Summe eines Interrahmenraumes und einer Back-Off-Zeit des Datenpakets (405).

6. Funkkommunikationssystem mit:
dem Funkkommunikationsanschlussgerät nach einem der Ansprüche 1 bis 5 und einer Funkrelaisstation (101) zum Senden eines darin gespeicherten Pakets an den Funkkommunikationsanschluss (102, 103), wenn die Funkrelaisstation das Steuerpaket empfängt, während das Funkkommunikationsanschlussgerät im Energiesparmodus arbeitet.

7. Funkkommunikationsverfahren mit den Schritten:
Erzeugen eines Sprachpakets (406);
Erzeugen eines Datenpakets (405);
Erzeugen eines Steuerpakets (404);
Empfangen eines Bezugsignals (403), das von einer Funkrelaisstation (101) in einem Energiesparmodus erzeugt wird;
Senden des Sprachpakets (406) und des Steuerpakets (404) an die Funkrelaistation (101) vor Ablauf einer vorgegebenen Zeit von der Zeit, zu der das Bezugssignal empfangen wurde;
Empfangen eines Pakets, das von der Funkrelaisstation (101) in Antwort auf das Steuerpaket gesendet wurde, und
Senden des Datenpakets (405) an die Funkrelaisstation, nachdem das Paket empfangen wurde,
wobei das Bezugssignal ein Markierungssignal ist, das in dem Energiesparmodus verwendet wird, und das Steuerpaket ein PS-Poll-Paket ist.

8. Funkkommunikationsverfahren nach Anspruch 7, wobei der Schritt des Sendens des Sprachpakets (406) und des Steuerpakets (404) das Senden des Sprachpakets und anschließendes Senden des Steuerpakets umfasst.

9. Funkkommunikationsverfahren nach Anspruch 7, wobei der Schritt des Sendens des Sprachpakets (406) und des Steuerpakets (404) das Senden des Steuerpakets und anschließend das Senden des Sprachpakets umfasst.

10. Funkkommunikationsverfahren nach einem der Ansprüche 7 bis 9, wobei die Funkrelaisstation (101) ein Zugriffspunkt eines drahtlosen LAN ist.

11. Funkkommunikationsverfahren nach einem der Ansprüche 7 bis 10, wobei die Summe eines Interrahmenraumes und einer Back-Off-Zeit des Sprachpakets (406) und die Summe eines Interrahmenraumes und einer Back-Off-Zeit des Steuerpakets (404) kleiner sind als die Summe eines Interrahmenraumes und einer Back-Off-Zeit des Datenpakets.

12. Funkkommunikationsverfahren mit:
den jeweiligen Schritten, die in dem Funkkommunikationsverfahren nach einem der Ansprüche 7 bis 11 enthalten sind, und
einem Paketsendeschritt, in dem die Funkrelaisstation (101) ein darin gespeichertes Paket an den Funkkommunikationsanschluss sendet, wenn die Funkrelaisstation das Steuerpaket (404) empfängt, während der Funkkommunikationsanschluss im Energiesparmodus arbeitet.

## Revendications

1. Appareil terminal de communication radio ayant un mode d'économie d'énergie et comprenant :
un générateur de données de transmission (1) pour générer un paquet de voix (406) et un paquet de données (405) ;
un générateur de paquet de contrôle (2) pour générer un paquet de contrôle (404) ;
un récepteur pour recevoir un signal de référence (403) et un paquet transmis d'une station de relais radio (101) ; et
un émetteur pour transmettre le paquet de voix généré par ledit générateur de données de transmission (1), le paquet de contrôle généré par ledit générateur de paquet de contrôle (2) et le paquet de données généré par ledit générateur de données de transmission (1) à ladite station de relais radio,
**caractérisé en ce que** ledit émetteur est adapté pour transmettre ledit paquet de voix et ledit paquet de contrôle avant qu'un temps prédéterminé ne s'écoule à partir du moment auquel ledit récepteur a reçu ledit signal de référence, et pour transmettre ledit paquet de données après que ledit récepteur a reçu un paquet transmis de ladite station de relais radio en réponse audit paquet de contrôle, dans lequel ledit signal de référence est une balise utilisée dans le mode d'économie d'énergie, et ledit paquet de contrôle est un paquet d'interrogation d'économie d'énergie.

2. Appareil terminal de communication radio selon la revendication 1, dans lequel ledit émetteur est adapté pour transmettre le paquet de contrôle généré par ledit générateur de paquet de contrôle (2) après que ledit émetteur a transmis le paquet de voix généré par ledit générateur de données de transmission (1), puis pour transmettre le paquet de données généré par ledit générateur de données de transmission (1).

3. Appareil terminal de communication radio selon la revendication 1, dans lequel ledit émetteur est adapté pour transmettre le paquet de voix généré par ledit générateur de données de transmission (1) après que ledit émetteur a transmis le paquet de contrôle généré par ledit générateur de paquet de contrôle (2), puis pour transmettre le paquet de données généré par ledit générateur de données de transmission (1).

4. Appareil terminal de communication radio selon l'une quelconque des revendications 1 à 3, dans lequel ladite station de relais radio est un point d'accès d'un réseau local (LAN) sans fil.

5. Appareil terminal de communication radio selon la revendication 4, dans lequel la somme d'un espace entre trames et d'un temps d'attente du paquet de voix (406), et la somme d'un espace entre trames et d'un temps d'attente du paquet de contrôle (404) sont inférieures à la somme d'un espace entre trames et d'un temps d'attente du paquet de données (405).

6. Système de communication radio comprenant :
l'appareil terminal de communication radio selon l'une quelconque des revendications 1 à 5 ; et
une station de relais radio (101) pour transmettre un paquet stocké à l'intérieur de celle-ci au dit terminal de communication radio (102, 103) lorsque ladite station de relais radio reçoit le paquet de contrôle pendant que ledit appareil terminal de communication radio fonctionne dans le mode d'économie d'énergie.

7. Procédé de communication radio comprenant les étapes consistant à :
générer un paquet de voix (406) ;
générer un paquet de données (405) ;
générer un paquet de contrôle (404) ;
recevoir un signal de référence (403) transmis d'une station de relais radio (101) dans un mode d'économie d'énergie ;
transmettre le paquet de voix (406) et le paquet de contrôle (404) à ladite station de relais radio (101) avant un écoulement d'un temps prédéterminé à partir du moment auquel le signal de référence a été reçu ;
recevoir un paquet transmis de ladite station de relais radio (101) en réponse au paquet de contrôle ; et
transmettre le paquet de données (405) à ladite station de relais radio après que ledit paquet a été reçu,
dans lequel ledit signal de référence est une balise utilisée dans le mode d'économie d'énergie, et ledit paquet de contrôle est un paquet d'interrogation d'économie d'énergie.

8. Procédé de communication radio selon la revendication 7, dans lequel ladite étape de transmission du paquet de voix (406) et du paquet de contrôle (404) inclut la transmission du paquet de voix puis la transmission du paquet de contrôle.

9. Procédé de communication radio selon la revendication 7, dans lequel ladite étape de transmission du paquet de voix (406) et du paquet de contrôle (404) inclut la transmission du paquet de contrôle puis la transmission du paquet de voix.

10. Procédé de communication radio selon l'une quelconque des revendications 7 à 9, dans lequel ladite station de relais radio (101) est un point d'accès d'un réseau local (LAN) sans fil.

11. Procédé de communication radio selon l'une quelconque des revendications 7 à 10, dans lequel la somme d'un espace entre trames et d'un temps d'attente du paquet de voix (406), et la somme d'un espace entre trames et d'un temps d'attente du paquet de contrôle (404) sont inférieures à la somme d'un espace entre trames et d'un temps d'attente du paquet de données (405).

12. Procédé de communication radio comprenant :
les étapes respectives incluses dans le procédé de communication radio selon l'une quelconque des revendications 7 à 11 ; et
une étape de transmission de paquet dans laquelle ladite station de relais radio (101) transmet un paquet stocké à l'intérieur de celle-ci au dit terminal de communication radio lorsque ladite station de relais radio reçoit le paquet de contrôle (404) pendant que ledit terminal de communication radio est en fonctionnement dans le mode d'économie d'énergie.
